**Europäisches Patentamt**

**European Patent Office**

**Office européen des brevets**

(19)

(11) Veröffentlichungsnummer: **0 053 762**

**B1**

(12)

# EUROPÄISCHE PATENTSCHRIFT

(45) Veröffentlichungstag der Patentschrift:
**02.07.86**

(21) Anmeldenummer: **81109921.7**

(22) Anmeldetag: **26.11.81**

(51) Int. Cl.⁴: **C 08 G 12/42**, C 08 G 12/12,
C 09 J 3/16

(54) **Verfahren zur Herstellung von Leimharzen.**

(30) Priorität: **06.12.80 DE 3046033**

(43) Veröffentlichungstag der Anmeldung:
**16.06.82 Patentblatt 82/24**

(45) Bekanntmachung des Hinweises auf die Patenterteilung:
**02.07.86 Patentblatt 86/27**

(84) Benannte Vertragsstaaten:
**AT BE CH DE FR GB IT LI NL SE**

(56) Entgegenhaltungen:
**EP-A-0 006 112**
**DE-A-2 745 809**
**FR-A-2 166 232**
**FR-A-2 199 543**
**FR-A-2 235 992**
**GB-A-546 410**
**GB-A-1 480 787**
**US-A-2 881 153**

(73) Patentinhaber: **BASF Aktiengesellschaft, Carl-Bosch- Strasse 38, D-6700 Ludwigshafen (DE)**

(72) Erfinder: **Dudeck, Christian, Dr., Odenwaldring 20,
D-6703 Limburgerhof (DE)**
Erfinder: **Weber, Engelbert, Erlenbergstrasse 22,
D-6730 Neustadt (DE)**
Erfinder: **Diem, Hans, Dr., Feldbergstrasse 63,
D-6800 Mannheim (DE)**
Erfinder: **Mayer, Johann, Dr., Am Mandelgarten 5,
D-6713 Freinsheim (DE)**
Erfinder: **Wittmann, Otto, Max- Beckmann- Strasse
13B, D-6710 Frankenthal (DE)**
Erfinder: **Lehmann, Gerhard J., Dr.,
Neuwiesenstrasse 4, D-6700 Ludwigshafen (DE)**

## Beschreibung

Es ist bekannt, daß Formaldehydkondensate des Harnstoffs besonders bei Einwirkung von Feuchtigkeit Formaldehyd abspalten. Wenn man sie als Bindemittel zur Herstellung von Holzwerkstoffen (Leimharze) verwendet, so erhält man Werkstoffe, die während und nach der Herstellung Formaldehyd an die Umgebung abgeben können.

Als Mittel zur Beeinflussung dieser lästigen Eigenschaft wird den Bindemitteln vor der Verarbeitung z.B. fester bzw. freier Harnstoff zugesetzt; man nimmt man, daß es besonders in Gegenwart der natürlichen Holz- bzw. Luftfeuchte zu einer Reaktion des Harnstoffs mit dem freiwerdenden Formaldehyd kommt, d.h. der Harnstoff als Fangsubstanz für den Formaldehyd wirkt.

Man kann auch das Verhältnis von Formaldehyd zu gebundenem Harnstoff, das ursprünglich besonders wegen der erzielbaren Festigkeit der Verleimungen zu etwa 1.6 bis 1.8 (mol/mol) gewählt wurde, herabsetzen, wobei die Neigung der Kondensate, wieder in ihre Ausgangsstoffe zu zerfallen, abnimmt.

Der Verringerung des Formaldehyd-Anteils im Leim sind allerdings Grenzen gesetzt: Die Bindefestigkeit und auch die Lagerstabilität nimmt ab, so daß "formaldehydarme" Harnstoffharz-Leime heute i.a. ein Molverhältnis von mindestens 1.4 aufweisen. Offensichtlich hat die Lagerstabilität mit der chemischen Stabilität gegen Formaldehyd-Verlust nichts zu tun.

Nun ist es schon aus der DE-OS 22 62 197 bekannt, Harnstoffharze mit einem End-Molverhältnis von 1.4 bis 1.65 kontinuierlich in einem Mehrstufenprozeß herzustellen, bei dem zur Verbesserung der Lagerstabilität in einer der Kondensationsstufen eine geringe Menge Methanol zugesetzt und eine bestimmte Reihenfolge von Maßnahmen eingehalten wird. Alle nach bekannten mehrstufigen Verfahren hergestellten Harze haben aber den Nachteil, daß mit abnehmendem Molverhältnis die Lagerfähigkeit abnimmt, worauf in der vorgenannten DE-OS auch hingewiesen wird. Der Vorschlag der DE-OS führt im Ergebnis ebenfalls zu Harzlösungen, die mindestens ein Molverhältnis von 1.4 aufweisen müssen.

Es ist daher eine Aufgabe der Erfindung, ein Verfahren zur Herstellung besonders formaldehydarmer Harnstoffharz-Leime anzugeben, die lagerstabil sind und außerdem eine gute Bindungsfestigkeit erzielen.

Es wurde gefunden, daß man in einem speziellen zwei- oder mehrstufigen Verfahren und unter Mitverwendung einer geringen Menge eines niedermolekularen ein- oder mehrwertigen Alkohols (z.B. Methanol, Ethanol oder Isopropanol sowie z.B. Ethylenglykol), Leime mit einem Molverhältnis von unter 1.4 erhält, wie dies in den Patentansprüchen näher angegeben ist.

Erfindungsgemäß weisen die Harnstoffharzleime im gebrauchsfertigen Zustand ein Molverhältnis von Formaldehyd zu Harnstoff von weniger als 1.4, bevorzugt weniger als 1.35, bis zu 1.05 auf.

Dabei liegt schließlich ein Teil des Harnstoffs in freier Form vor, d.h. die erfindungsgemäßen Harze stellen eine wäßrige Mischung aus Kondensaten von Harnstoff und Formaldehyd, freiem Harnstoff und ggf. einer geringen Restmenge an freiem Formaldehyd dar. In Harzlösungen, die einen Feststoffgehalt von 66,5 % aufweisen, kann man nämlich, z.B. durch Abbau mit Urease, einen Gehalt von etwa 10 bis 15 %, u.U. auch mehr, an freiem Harnstoff messen (Gew.-%, bezogen auf die Lösung). Dies entspricht einem Anteil von z.B. 0.25 bis 0.40 mol, bezogen auf den insgesamt eingesetzten Harnstoff.

Zur Unterscheidung der Erfindung vom Bekannten muß übrigens gesagt werden, daß man herkömmlichen Harnstoffharz-Leimen keinen freien Harnstoff zusetzen kann, ohne daß die Lagerfähigkeit leidet. Der eingangs erwähnte Zusatz wird daher regelmäßig erst unmittelbar vor der Verarbeitung vorgenommen.

Der wesentliche Unterschied der Erfindung von dem durch die DE-OS 22 62 197 markierten Stand der Technik beruht auf der überraschenden Erkenntnis, daß die Lagerfähigkeit von Harzlösungen mit besonders niedrigem Formaldehydanteil und ihr gesamtes sonstiges Verhalten günstig beeinflußt werden, wenn die Kondensation auf der "formaldehydreichen" ersten Stufe besonders hoch getrieben wird. Der Kondensationsgrad kann durch die Viskosität der Lösung ausgedrückt werden und soll - bei 20°C und bezogen auf 66.5 %ige Lösung - mindestens 600, besser mindestens 700 mPas betragen.

Zur Durchführung des Verfahrens geht man in üblicher Weise von wäßrigem Formaldehyd und Harnstoff oder von - gewöhnlich harnstoffhaltigen - Formaldehydlieferanten und Harnstoff aus. Eventuell können auch Paraformaldehyd oder ähnliche Stoffe verwendet werden. Man läßt gewöhnlich unter schwach alkalischen Bedingungen eine Vorreaktion (Methylolierung) ablaufen, sofern nicht der Formaldehydlieferant bereits eine entsprechende Struktur mitbringt. Geeignete konzentrierte Formaldehydlieferanten, die auch handelsüblich sind, sind z.B. in der DE-OS 24 51 990 oder der DE-PS 22 24 258 beschrieben. Auch der in der DE-OS 22 62 197 erwähnte sog. Formurea ist geeignet.

Bei der Vorreaktion fällt der pH-Wert gewöhnlich freiwillig ab und wird nun in einen pH-Bereich von unter 6, bevorzugt pH 4 bis 5 gebracht, worauf die Kondensation einsetzt. Eine ausreichend hohe Temperatur - i.a. 90 bis 110°C - muß eingehalten werden, um ausreichend kurze Reaktionszeiten zu erzielen. Auch ein niedrigerer pH-Wert verkürzt die Reaktionsdauer.

Die sauren Bedingungen während der Kondensation ermöglichen eine Veretherungsreaktion, so daß der erfindungsgemäß anwesende Alkohol vermutlich in das Harz eingebaut wird.

Die Kondensation wird erfindungsgemäß bis zu begrenzter Wasserverdünnbarkeit fortgesetzt und zwar muß ein Kondensationsgrad, der einem Trübungspunkt von 50°C oder weniger (1:5 mit heißem Wasser verdünnte Lösung) bzw. einer Viskosität in der fertigen Leimlösung von 600, besser 700 mPas oder mehr (bei 20°C, Leimlösung mit 66.5 Gew.-% Trockengehalt) entspricht, eingestellt werden. Aus der Tatsache, daß die Harze überhaupt bis zur begrenzten Wasserverdünnbarkeit kondensiert werden können, ergibt sich übrigens ein wesentlicher Unterschied zu vollständig oder annähernd vollständig veretherten Harzen, die bekanntlich bei praktisch jedem Kondensationsgrad beliebig wasserverträglich sind.

Die Abhängigkeit der Viskosität von der Konzentration einer Harzlösung ist eine bekannte Erscheinung; die Erfindung ist daher nicht auf solche Harze beschränkt, die in 66.5 %iger Lösung vorliegen. Eine stärker verdünnte Lösung hat demnach eine geringere Mindestviskosität als 600 mPas und eine konzentriertere Lösung eine höhere Mindestviskosität.

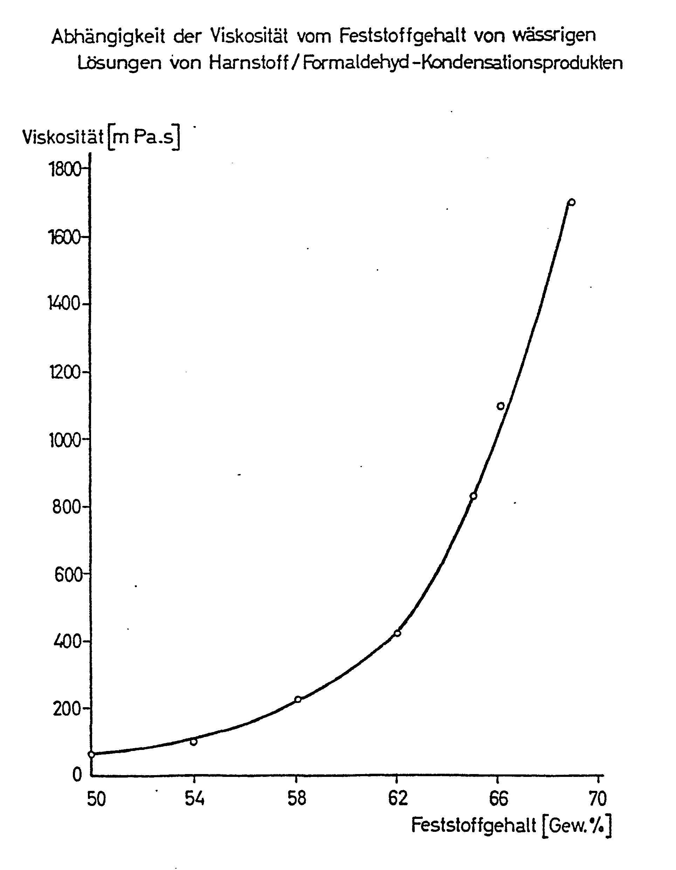

Die gemessene Abhängigkeit wird durch eine Kurve dargestellt, die in der Figur wiedergegeben ist.

Die Kondensationsreaktion wird wie gewöhnlich durch Einstellen eines pH-Wertes von 7 bis 8 abgebrochen. Es schließt sich in den meisten Fällen ein Verfahrensgang an, bei dem überschüssiges Wasser bei mäßig erhöhter Temperatur (40 bis 70°C) soweit entzogen wird (sog. Einengen), daß die Kondensate sich eben noch handhaben lassen. Die nach der folgenden Stufe erhaltenen Harze sollen 60 bis 70 % Harzsubstanz aufweisen. Bezüglich des Begriffs Harzsubstanz (Trockengehalt) wird auf den weiter unten folgenden Abschnitt verwiesen.

Erfindungsgemäß wird dem Kondensat - gegebenenfalls nach dem Einengen - Harnstoff bis zu einem Molverhältnis von weniger als 1.4 zugesetzt. Notwendig ist der Zusatz wenigstens einer Teilmenge am Schluß, d.h. nach dem Einengen. Die Maßnahme des Einengens selbst ist nicht entscheidend; falls hiervon Gebrauch gemacht wird, ist es zu bevorzugen, die gesamte Harnstoffmenge nach dem Einengen zuzusetzen und unmittelbar danach bis auf Raumtemperatur abzukühlen.

Die erfindungsgemäß erhaltenen Leimharz-Lösungen können in gewohnter Weise verarbeitet werden, d.h. unter Zusatz üblicher Härter, auf üblichen Anlagen (z.B. zur Spanplattenherstellung) und mit üblichen Verarbeitungszeiten.

Der Trockengehalt von Leimharzen ist das Gewicht einer unter definierten Bedingungen (Temperatur, Zeit) getrockneten Probenmenge, bezogen auf das ursprüngliche Probengewicht. Da bei der Trockengehaltsbestimmung nicht bis zur Gewichtskonstanz getrocknet wird, handelt es sich um eine konventionelle Methode.

Es wird eine Probenmenge von z.B. etwa 1 g in ein Wägeschälchen eingewogen (dabei ist darauf zu achten, daß die Probenmenge repräsentativ ist; u.U. Probe durch Schütteln oder Umrühren vorher homogenisieren). Der Boden des Wägeschälchens soll mit einer etwa gleichmäßig dicken Schicht des zu trocknenden Produktes bedeckt sein.

Die Probe wird im Trockenschrank entweder bei 120°C während 2 Stunden oder bei 103°C während 15 Stunden getrocknet. Die angegebene Zeit und Temperatur müssen genau eingehalten werden.

Der Trockenschrank gestattet natürliche Durchlüftung auf herausnehmbaren Einlegeböden mit einer offenen Siebfläche von 70 %. Zur laufenden Kontrolle der Schranktemperatur ist ein Thermometer durch die Einführungsöffnung zu stecken, dessen Skalenteil außerhalb des Schrankes liegt und dessen Temperaturfühler sich im Nutzraum an der Stelle befindet, an der die Wägegläschen - gleichmäßig verteilt - abgestellt werden. Die Proben dürfen die beheizten Schrankwände nicht berühren. Da durch starke Belegung mit Proben die Temperaturverhältnisse im Schrank gestört werden, sollen je nach Schrankgröße nicht mehr als z.B. 10 Proben auf einmal getrocknet werden. Nach der vorgeschriebenen Trockenzeit werden die Proben in einem mit gekörntem Calciumchlorid versehenen Exsikkator abgekühlt und ausgewogen. Es werden jeweils 3 Bestimmungen durchgeführt und der arithmetische Mittelwert errechnet.

**Beispiel 1**

1 kg eines wäßrigen Vorkondensationsproduktes, das 485 g Formaldehyd im Molverhältnis 4:1 an Harnstoff gebunden enthält, wird mit 323 g Harnstoff-Lösung (68 %ig 70°C heiß) und 131 g Methanol gemischt, mit 25 %iger Natronlauge auf einen pH-Wert von 7,3 eingestellt und unter Rühren auf 90°C erhitzt. Man beläßt das Reaktionsgemisch 10 Minuten bei dieser Temperatur, wobei der pH-Wert sinkt. Anschließend wird mit 20 %iger Ameisensäure ein pH-Wert von 4,5 eingestellt und bei 90 bis 98°C bis zu einem Trübungspunkt von 25°C (1 Teil Reaktionsgemisch verdünnt mit 5 Teilen heißem Wasser) kondensiert. Die Kondensation verläuft in etwa 50 minuten. Die Viskosität einer Probe beträgt 620 mPas (gemessen bei 20°C).

Nach Erreichen des Trübungspunktes wird die Reaktion durch Zugabe von 25 %iger Natronlauge bis zum pH-Wert 7,5 abgebrochen und es werden 312 g heiße Harnstoff-Lösung zugefügt. Nach Kühlung auf 50°C werden unter vermindertem Druck 370 g Wasser abdestilliert und anschließend nochmals 312 g Harnstofflösung zugefügt. Die so erhaltene Harzlösung wird rasch unter 20°C gekühlt. Sie hat folgende Eigenschaften:
Molverhältnis: 1,1: 1
Wasserverträglichkeit (20°C) 1: 3.5

Viskosität (20°C): 708 mPas (20°C)
pH-Wert: 8,6
Lagerstabilität bei 20°C: mind. 3 Monate
Gelierzeit bei 50°C:
(nach Zusatz von 10 % einer 113 min
15 %igen $NH_4Cl$-Lösung)
Dichte 20°C: 1,2775 g/cm³

## Vergleichsversuch

Verfährt man wie unter Beispiel 1 beschrieben, unterläßt jedoch den Zusatz von Methanol, so unterscheidet sich das so erhaltene Harz von dem nach Beispiel 1 erhaltenen zunächst äußerlich durch eine geringere Wasserverdünnbarkeit (1:1.1). Die Lagerstabilität, unter vergleichbaren Bedingungen, beträgt nur etwa einen Monat.

Stellt man aus beiden Harzen jeweils Versuchs-Spanplatten her, so liegt, mit dem gleichen Verfahren gemessen, die Scherfestigkeit bei 3.0 N/mm², wenn als Bindemittel das gemäß Beispiel 1 hergestellte verwendet wurde, während das ohne Methanolzusatz hergestellte nur 2,6 N/mm² erzielt.

## Beispiel 2

Man verfährt zunächst wie in Beispiel 1 beschrieben. Nach Erreichen des Trübungspunktes wird neutralisiert und auf 50°C abgekühlt, 180 g Wasser abdestilliert und dem Reaktionsgemisch 425 g fester Harnstoff zugefügt. Nachdem ein pH-Wert von 8.9 eingestellt ist, wird rasch auf unter 20°C gekühlt. Die erhaltene Harzlösung hat folgende Eigenschaften:
Viskosität: 719 mPas (20°C)
pH-Wert: 8.9
Lagerstabilität bei 20°C: mind. 4 Monate
Gelierzeit bei 50°C:
(nach Zusatz von 10 % einer 93 min
15 %igen $NH_4Cl$-Lösung)
Dichte 20°C: 1,271 g/cm³

## Beispiel 3

Man verfährt zunächst wie vorstehend beschrieben, wobei jedoch statt 131 g Methanol nur 73 g zugesetzt werden. Die Kondensation wird ca. 30 Minuten fortgesetzt.

Nach Einstellung eines pH-Wertes von 6,6 werden unter vermindertem Druck bei 50°C 275 g Wasser abdestilliert. Nachdem 637 g Harnstoff-Lösung (wie oben) zugesetzt worden sind, wird die Lösung rasch abgekühlt und der für die Lagerung vorgesehene pH-Wert eingestellt.
Eigenschaften der Harzlösung:
Viskosität: 717 mPas (20°C)
pH-Wert: 8,95

Lagerstabilität: mind. 3 Monate
Gelierzeit bei 50°C.
(nach Zusatz von 10 % 73 min
einer 15 %igen $NH_4Cl$
-Lösung)
Dichte 20°C: 1,280 g/cm³

## Beispiel 4

Man verfährt wie im Beispiel 3 beschrieben, jedoch wird anstelle von Methanol eine gleiche Menge Ethanol eingesetzt.
Man erhält eine Lösung mit folgenden Eigenschaften:
Viskosität: 735 mPas (20°C)
pH-Wert: 8,65
Lagerstabilität: mind. 3 Monate

## Beispiel 5

3744 kg einer Lösung, die einen rechnerischen Gehalt eines Vorkondensationsproduktes aus 1872 kg Formaldehyd und 936 kg Harnstoff enthält, wird mit 824 kg einer 68 %igen 70°C heißen Harnstoff-Lösung, 358 kg Methanol und 130 kg 25 %iger Ammoniak-Lösung in einem heiz- und kühlbaren Rührbehälter von 6 m³ Inhalt vorgelegt; dabei stellt sich ein pH-Wert von 8,3 ein, der beim Aufheizen auf ca. 90°C bis auf 7,2 abfällt. Bei diesem pH-Wert wird die Temperatur 10 Minuten gehalten. Anschließend werden 600 kg 68 %ige Harnstoff-Lösung zugesetzt und mit 10 %iger Ameisensäure auf einen pH-Wert von 4,5-4,6 gebracht. Die Lösung wird unter Rühren bei 98°C solange zur Reaktion gebracht, bis ein Trübungspunkt (1:5 mit Wasser) von 30 bis 32°C erreicht ist. Danach wird mit 25 %iger Natronlauge ein pH-Wert von 6,6 eingestellt.

Unmittelbar anschließend werden weitere 772 kg 68 %ige, heiße Harnstoff-Lösung zugesetzt. Mit Hilfe einer Kreiselpumpe wird die Lösung in eine Eindampfanlage überführt. Nach Zugabe von weiteren 598 kg 68 %iger Harnstoff-Lösung wird bei 110 mbar und 48°C indirekt mittels 11 bar Dampf der Dünnleim auf eine Dichte bei 48°C von 1,23 g/cm³ eingeengt.

Der so erhaltene Reaktionsansatz wird mittels Plattenkühler oder Entspannungskühlung sehr rasch auf eine Temperatur von 20°C abgekühlt. Anschließend wird mittels 25 %iger Natronlauge der gewünschte pH-Wert eingestellt.

## Kenndaten

Viskosität: 1 147 mPas
pH-Wert: 8,8
Lagerbarkeit bei 20°C: mind. 3 Monate
Gelierzeit bei 20°C:
(nach Zusatz von 10 % einer

15 %igen NH$_4$Cl-Lösung) 80 min
Dichte 20°C: 1,27 g/cm$^3$

## Patentansprüche

1. Verfahren zur Herstellung von wäßrigen Harnstoff-Formaldehyd-Holzleimen mit einem Formaldehydanteil von weniger als 1.4 mol je Mol Harnstoff, dadurch gekennzeichnet, daß man, ggf. nach einer methylolierenden Vorreaktion, in einer ersten Stufe wäßrigen Formaldehyd oder formaldehydliefernde Verbindungen und Harnstoff im Molverhältnis von 1,8 oder mehr in Gegenwart einer wirksamen Menge von bis zu 0,3 mol eines ein- oder mehrwertigen Alkohols, bezogen auf den insgesamt vorgesehenen Harnstoff, bei einem pH-Wert unter 6 bis zu einer Viskosität von wenigstens 600 mPas, gemessen bei 20°C an einer Lösung mit einem Kondensatgehalt von 66,5 %, kondensiert, die Kondensation unterbricht, ggf. einengt und in einer zweiten Stufe Harnstoff bis zu einem Molverhältnis Formaldehyd zu Harnstoff von weniger als 1,4 zusetzt, wobei ggf. wenigstens eine Teilmenge nach dem Einengen zugesetzt wird.

2. Verfahren nach Anspruch 1, dadurch gekennzeichnet, daß man bei einem pH-Wert von 5 oder weniger kondensiert.

3. Verfahren nach Anspruch 1, dadurch gekennzeichnet, daß der Formaldehydanteil im Holzleim weniger als 1.35 mol je Mol Harnstoff beträgt.

4. Verfahren nach Anspruch 1, dadurch gekennzeichnet, daß man als formaldehydliefernde Verbindungen formaldehydreiche Vorkondensate des Harnstoffs, die 4 oder mehr mol Formaldehyd je mol Harnstoff enthalten, verwendet.

5. Verfahren nach Anspruch 1, dadurch gekennzeichnet, daß man die gesamte Harnstoffmenge der zweiten Stufe nach dem Einengen zusetzt und unmittelbar danach abkühlt.

6. Verfahren nach Anspruch 1, dadurch gekennzeichnet, daß man in Gegenwart von 0,05 bis 0,3 mol Methanol bei einem pH-Wert von 5 oder weniger kondensiert.

7. Verfahren nach Anspruch 1, dadurch gekennzeichnet, daß man in Gegenwart von 0,025 bis 0,3 mol Ethylenglykol kondensiert.

8. Verfahren nach Anspruch 1, dadurch gekennzeichnet, daß man die methylolierende Vorreaktion in Gegenwart von Ammoniak vornimmt.

9. Wäßrige, als Leimharz geeignete Zubereitung herstellbar nach dem Verfahren gemäß einem der vorstehenden Ansprüche.

10. Verwendung der Leimharze gemäß Anspruch 9 zur Herstellung von Spanplatten.

## Claims

1. A process for the preparation of aqueous urea/formaldehyde wood glues containing less than 1.4 moles of formaldehyde per mole of urea, wherein, after an optional hydroxymethylating reaction, in a first stage aqueous formaldehyde or a formaldehyde-donating compound and urea in a molar ratio of $\geq$ 1.8:1 are condensed in the presence of an effective amount of up to 0.3 mole of a monohydric or polyhydric alcohol, with reference to the total amount of urea envisaged, at a pH of less than 6, to a viscosity of at least 600 mPas, measured at 20°C on a solution having a condensate content of 66.5%, the condensation is interrupted and concentration is optionally carried out, and, in a second stage, urea is added to give a molar ratio of formaldehyde to urea of less than 1.4:1, and, if concentration is carried out, at least part of the urea is added after the concentration step.

2. A process as claimed in claim 1, wherein condensation is carried out at a pH of 5 or less.

3. A process as claimed in claim 1, wherein the wood glue contains less than 1.35 moles of formaldehyde per mole of urea.

4. A process as claimed in claim 1, wherein the formaldehydne-donating compound used is a urea precondensate which is rich in formaldehyde and contains at least 4 moles of formaldehyde per mole of urea.

5. A process as claimed in claim 1, wherein all the urea employed in the second stage is added after the concentration step, and immediately thereafter cooling is effected.

6. A process as claimed in claim 1, wherein condensation is carried out in the presence of from 0.05 to 0.3 mole of methanol at a pH of 5 or less.

7. A process as claimed in claim 1, wherein condensation is carried out in the presence of from 0.025 to 0.3 mole of ethylene glycol.

8. A process as claimed in claim 1, wherein the prior hydroxymethylating reaction is carried out in the presence of ammonia.

9. An aqueous formulation suitable as an adhesive, and obtainable by a process as claimed in any of the preceding claims.

10. The use of an adhesive according to claim 9 for the production of particle board.

## Revendications

1. Procédé de préparation de colles à bois aqueuses à base d'urée-formaldéhyde avec une proportion de formaldéhyde de moins de 1,4 mol par mol d'urée, caractérisé en ce qu'après une éventuelle réaction préalable de méthylolation, on condense, en une première phase, du formaldéhyde aqueux ou des composés donnant du formaldéhyde et de l'urée dans un rapport molaire de 1,8 ou plus, en présence d'une quantité active, pouvant aller jusqu'à 0,3 mol, d'un mono- ou polyalcool par rapport à l'urée prévue au total, à un pH de moins de 6, jusqu'à une viscosité, mesurée à 20°C sur une solution ayant une teneur en condensat de 66,5 %, d'au moins 600 mPas, on interrompt la condensation, on concentre éventuellement et, en une seconde phase, on ajoute de l'urée jusqu'à un rapport molaire du formaldéhyde à l'urée de moins de 1,4, une quantité partielle au moins étant ajoutée éventuellement après la concentration.

2. Procédé selon la revendication 1, caractérisé en ce qu'on condense à un pH de 5 ou moins.

3. Procédé selon la revendication 1, caractérisé en ce que la proportion de formaldéhyde dans la colle à bois s'élève à moins de 1,35 mol par mol d'urée.

4. Procédé selon la revendication 1, caractérisé en ce qu'on utilise, en tant que composés donnant du formaldéhyde, des pré-condensats de l'urée riches en formaldéhyde, qui contiennent 4 mol ou plus de formaldéhyde par mol d'urée.

5. Procédé selon la revendication 1, caractérisé en ce qu'on ajoute la quantité totale d'urée de la seconde phase après la concentration et on refroidit immédiatement après.

6. Procédé selon la revendication 1, caractérisé en ce qu'on condense en présence de 0,05 à 0,3 mol de méthanol, à un pH de 5 ou moins.

7. Procédé selon la revendication 1, caractérisé en ce qu'on condense en présence de 0,025 à 0,3 mol d'éthylèneglycol.

8. Procédé selon la revendication 1, caractérisé en ce qu'on procède à la réaction préalable de méthylolation en présence d'ammoniac.

9. Préparation aqueuse, convenant comme résine-colle, susceptible d'être préparée par le procédé selon l'une quelconque des revendications 1 à 8.

10. Utilisation des résines-colles selon la revendication 9 pour la fabrication de panneaux de particules.

Abhängigkeit der Viskosität vom Feststoffgehalt von wässrigen
Lösungen von Harnstoff / Formaldehyd -Kondensationsprodukten